(19) Europäisches Patentamt
European Patent Office
Office européen des brevets

(11) Publication number: **0 210 492 B1**

(12) # EUROPEAN PATENT SPECIFICATION

(45) Date of publication of patent specification: **08.03.89**

(51) Int. Cl.$^4$: **C 09 B 62/51,** D 06 P 1/384

(21) Application number: **86109415.9**

(22) Date of filing: **10.07.86**

(54) **Water-soluble monoazo compounds, process for their preparation and their use as dyestuffs.**

(30) Priority: **18.07.85 US 756482**

(43) Date of publication of application:
**04.02.87 Bulletin 87/06**

(45) Publication of the grant of the patent:
**08.03.89 Bulletin 89/10**

(84) Designated Contracting States:
**CH DE FR GB IT LI**

(56) References cited:
**EP-A-0 124 797**
**EP-A-0 144 704**
**FR-A-2 098 350**

(73) Proprietor: **HOECHST CELANESE CORPORATION**
**Route 202-206 North**
**Somerville, N.J. 08876 (US)**

(72) Inventor: **Corso, Anthony J.**
**5 Crocus Court**
**Coventry, RI 02816 (US)**
Inventor: **Meininger, Fritz, Dr.**
**7 Loreleistrasse**
**D-6000 Frankfurt am Main 80 (DE)**
Inventor: **Roe, Kathe**
**528 Commonwealth Ave.**
**Warwick, RI 02886 (US)**

(74) Representative: **Reuter, Johann-Heinrich, Dr. et al**
**HOECHST AKTIENGESELLSCHAFT Zentrale Patentabteilung Postfach 80 03 20**
**D-6230 Frankfurt/Main 80 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 210 492 B1

Courier Press, Leamington Spa, England.

**Description**

The present invention relates to the industrial field of fibre-reactive dyestuffs.

U.S. Patent Specification No. 4,046,754 discloses, in the 6th Table-Example in col. 5/6 and in Example 7, monoazo dyestuffs which contain a 2-amino-8-(β-sulfatoethylsulfonyl)- or -8-(β-phosphatoethylsulfonyl)-naphthalene-6-sulfonic acid as diazo component and the 2-acetylamino-8-naphthol-6-sulfonic acid or the 1-benzoylamino-8-naphthol-3,6-disulfonic acid, respectively, as coupling component. Dyeings prepared with these dyestuffs on cotton have good fastnesses to light and washing, however, have disadvantages in respect to their fastnesses to chlorine bleach and to chlorinated water. The dyestuffs of invention overcome these disadvantages.

Furthermore, the European Application Publication No. 0,124,797 A1 describes azo dyestuffs which contain the 2-amino-6-(β-sulfatoethylsulfonyl)-naphthalene-1-sulfonic acid as diazo component and the 1-benzoylamino-8-naphthol-4,6-disulfonic acid as coupling component and which are told to have superior fastness to chlorine bleach and chlorinated water in respect to a prior art dyestuff which differs from said dye of EP—A—0 124 797 in the diazo as well as coupling component.

Furthermore, the French Application Publication No. 2,098,350A shows, for example, monoazo dyestuffs which are built up from the 6-(β-sulfatoethylsulfonyl)- or 6-(β-thiosulfatoethylsulfonyl)-2-amino-naphthalene as the diazo component and 2-acetylamino-8-naphthyl-6-sulfonic acid as the coupling component.

The present invention provides novel, valuable azo dyestuffs having improved properties, such as chlorine colour fastness, colour strength and build-up properties, which correspond to the general formula (1)

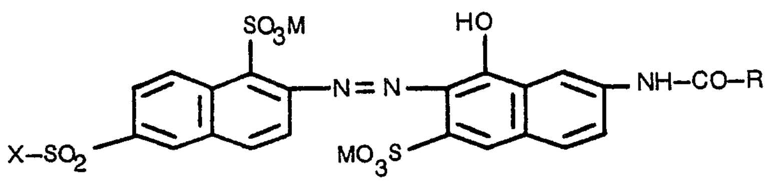

(1)

wherein

M is a hydrogen or an alkali metal, such as sodium, potassium or lithium,

X is the vinyl group or a group of the general formula (2)

$$—CH_2CH_2—Z \quad (2)$$

in which Z is a substituent which can be eliminated by an alkaline agent, and

R is an alkyl group of 1 to 3 C-atoms, preferably thereof a methyl group, or is the phenyl group.

The group Z which can be eliminated from the group of the formula (2) by means of an alkaline agent together with a hydrogen atom to form the vinyl group, is, for example, the chlorine atom, the bromine atom, a dialkylamino group with alkyl radicals each of 1 to 4 carbon atoms, such as the dimethylamino and the diethylamino group an alkanoyloxy group of from 2 to 5 carbon atoms, such as the acetyloxy and the propionyloxy group, a phosphato group, a thiosulfato group, and preferably a sulfato group.

The compounds of the general formula (1) in which X represents the vinyl group or a β-sulfatoethyl group, represent preferred embodiments of the instant invention.

According to the definition of the general formula (1) the novel azo compounds can be present in form of their free acids as well as in form of their salts. They are preferably in the form of their salts, in particular the alkali metal salts, and they are preferably used in the form of their salts for coloring (such as dyeing and printing) materials, in particular fibre materials, containing hydroxy groups and/or carbonamide groups. In addition, the compounds of this invention show surprisingly superior color fixation properties when the fibre-reactive moiety is prematurely converted to the vinyl moiety in the commercial dyeing operation.

A sulfo group, as mentioned before or in the subsequent text, is a group of the general formula $—SO_3M$; likewise a phosphato group a group of the general formula $—OPO_3M_2$, a thiosulfato group a group of the general formula $—S—SO_3M$ and a sulfato group a group of the general formula $—OSO_3M$, wherein in each group M is defined as above.

The present invention not only provides the novel compounds according to the general formula (1), it also concerns a process for the manufacture of these compounds. This process according to the invention comprises coupling a compound of the formula (3)

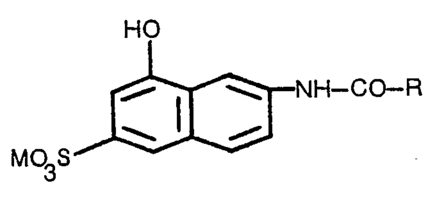

(3)

in which M and R are defined as above, with a diazotized amino compound of the general formula (4)

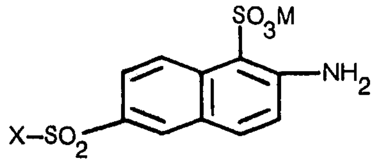

(4)

in which M and X are defined as above, analogously to known procedures of coupling a naphthol coupling component with a diazotized aminonaphthalene diazo component under the conventional conditions for the preparation of fiber-reactive azo compounds — in particular in an aqueous medium and at a temperature, between 0 and 30°C, preferably between 5 and 15°C, and a pH-value between 3 and 8, preferably between 4 and 7.

The compounds of formula (1) can be separated from the synthesis solution, after their preparation, by generally known methods suitable for water-soluble compounds, such as, for example, by precipitation from the reaction medium by means of electrolytes, such as, for example, sodium chloride or potassium chloride, or by evaporation of the reaction solution, for example by spray-drying. When the latter method for isolation of the novel compounds of formula (1) is chosen, it may be advantageous to remove sulfate portions if they are present in the synthesis solutions, before evaporation. This can be accomplished by precipitation of the sulfates as calcium sulfate and filtration. In some cases, it may also be possible for the solutions obtained in the synthesis of the compounds of formula (1), to be used directly as a liquid dyestuff composition for the dyeing or printing a fiber material, such as fiber material.

The compounds of formula (1) have valuable dyestuff properties. They are suitable, as water-soluble dyestuffs, for colouring (dyeing and printing) leather or materials containing hydroxy groups and/or carbonamide groups, in particular materials made from natural, regenerated or synthetic, nitrogen-containing fibers or from natural, regenerated or synthetic hydroxy groups-containing fibers. The dyestuffs according to the invention are capable of coloring these materials to deep, brilliant scarlet shades with very good fastness properties The fiber-reactive group in the compounds of the invention can react with the NH- and OH-groups of the material, such as a fiber material, — with the hydroxy groups preferably in the alkaline medium, — to form a covalent body and thus to form a fast link with the fiber.

The present invention thus also relates to the use of the compounds of formula (1) for coloring (such as dyeing and printing) such materials, respectively, to a process for colouring those materials (substrates) comprising applying (contacting) a compound of formula (1), preferably in form of an aqueous solution, to (with) said substrate and fixing the compound of formula (1) on said substrate, optionally under the action of an alkaline agent and/or by treating with heat.

Nitrogen-containing materials are, for example, synthetic polyurethane and polyamides such as polyamide-6.6-polyamide-6, polyamide-11 and polyamide-4, preferably in form of their fibers; natural polyamide fiber materials are silk and wool and other animal hair.

Materials containing hydroxy groups are, for example, polyvinyl alcohols, in particular cellulosic fiber materials preferably cotton and other vegetable fibers, such as linon, hemp, jute, furthermore their regenerated products, such as, in particular, fibers made of regenerated cellulose, such as viscous rayon or cuprammonium rayon.

The novel compounds of formula (1) can be applied to the mentioned substrates by the application techniques which are generally known for fiber-reactive dyestuffs. Thus, in general, a procedure is followed in which the compounds of the formula (1) are applied to the substrate in aqueous solution, if appropriate in the presence of a customary thickener and/or if appropriate other auxiliaries, which, for example, can improve the affinity, the leveling power and the migration properties. These aqueous solutions can be weakly acid, neutral or alkaline. After application, the dyestuff is then fixed to the fiber by known methods.

The compounds of the formula (1) are applied to natural, regenerated or synthetic polyamide fibers or polyurethane fibres or to leather by conventional techniques from an aqueous acid to aqueous neutral solution (pH range from about 3 to 6.5), preferably by the exhaustion methods, and are fixed on these fibers under the action of heat, in particular at a temperature between 60 and 130°C. Thus, for example, it is possible to add acetic acid or acetic acid and ammonium acetate as a buffer to the bath containing the compond of the general formula (1) in order to obtain the desired pH value. Addition of customary leveling agents, for example those based on a reaction product of cyanuric chloride and three moles of an aminobenzenesulfonic acid and/or an aminonaphthalenesulfonic acid or those based on a reaction product of stearylamine and ethylene oxide, is recommended for the purpose of achieving dyeings with a useful levelness. The compounds of formula (1) can be applied to the fixed on the substrate by the exhaustion process either at the boiling point or at a higher temperature, such as, for example, at 105 to 120°C, under pressure. It is expedient for the dyeing to be started with a slow increase in temperature to 60°C and, after some time, for the temperature to be increased slowly to a higher temperature.

In the coloring (dyeing) fiber materials containing hydroxy groups, the compound of formula (1) is generally applied to the fiber from a weakly acid to alkaline solution and is fixed on the fiber in the presence

of an alkaline agent which may also be added subsequently to the aqueous dyeing liquor or applied directly to the fiber.

Alkaline substances which can be used in these fixing solutions are, for example, sodium hydroxide, sodium carbonate, sodium bicarbonate, potassium hydroxide, potassium carbonate, trisodium phosphate or sodium or potassium silicate or waterglass.

The compounds of formula (1) are applied preferably by exhaustion dyeing procedures. In this case, the fiber material is treated in an aqueous-alkaline solution of the compound of the formula (1), advantageously with the addition of an electrolyte, such as sodium chloride or sodium sulfate, at elevated temperatures, such as at a temperature beween 30 and 110°C, it being advantageous for the dyeing to be started at a low temperature and for the temperature of the exhaustion bath to be slowly increased to 60°C, and completing the fixation step at this temperature. It is also possible for the fiber, such as, for example, the cellulose fiber, to be pretreated with a solution of an alkaline compound and then, if necessary after intermediate drying, to be impregnated with an aqueous solution of the compound of the formula (1); the fiber-reactive compound of formula (1) can then be fixed on the fiber at room temperature, but preferably under a heat treatment.

If the compounds of formula (1) are applied to the fiber material in the form of printing pastes, it is usual to employ thickeners, such as sodium alginate, cellulose ether, tragacanth or gum arabic, if appropriate with the addition of a customary printing auxiliary and the above-mentioned alkaline compounds. These prints are then treated with hot air at a temperature between 70 and 230°C, preferably between 100 und 150°C (thermofixed), or steamed. The compounds of formula (1) can thus be applied to the cellulose fiber by customary printing processes such as either in a one-phase procedure using a printing paste of the compound of formula (1) containing sodium bicarbonate or one of the other above-mentioned alkaline agents, with subsequent fixation of the compound of the formula (1) by steaming at 101 to 103°C, or they can be applied to the fiber in a two-step process, first applying a neutral or weakly acid printing paste containing the compound of formula (1) and then fixing the compound of formula (1) on the fiber either by passing the printed material through a hot alkaline bath containing electrolytes, or by overpadding with an alkaline liquor containing electrolytes and subsequently left to stand at room temperature or treated with heat, such as hot steam or hot air. If an electrolyte-containing alkaline bath, through which the material impregnated with the compound of formula (1) is passed for fixing, is used, the bath temperature is 60 to 105°C, so that subsequent treatment by hot air or steam can be dispensed with. If the material impregnated with the compound according to the invention is treated with a strong aqueous alkali, such as, for example, sodium hydroxide or potassium hydroxide and/or sodium silicate or potassium silicate or trisodium phosphate, it is sufficient for the moist goods, preferably prints, which have been impreganted with alkali to be left to stand at room temperature for a relatively long period, in order to fix the compounds of formula (1).

The colored materials thus obtained are then after-treated, rinsed and dried, in the customary manner.

Colored fiber materials on which the compounds of the general formula (1) have been fixed, have very good wet fastness properties. They show strong, scarlet shades; outstanding wet fastness properties, are, in particular, fastnesses to washing at 60 to 95°C, to alkaline and acid perspiration, to water (severe), to bleaching with sodium chlorite and to chlorinated water.

In particular, the dyeings with the dyestuff according to the invention have, in the dry and moist state, a remarkably good fastness to light. The compounds of formula (1) have a very good affinity and exhibit a high degree of fixation (high tinctorial strength). They fix on the different fibers of a cotton/viscose staple mixed fabric in the same intensity and thus produce uniform shade and depth of color on such mixed fiber materials.

The following Examples serve to illustrate the invention. The parts are parts by weight, and the percentage data relate to percentage by weight, unless otherwise indicated. Parts by volume bear the same relationship to parts by weight as liter to kilogram. The absorption maximum ($\lambda_{max}$) in the visible range of the alkalimetal salts of the compounds according to the invention have been determined in aqueous solution.

Example 1

361.5 parts of 2-amino-6-(β-sulfatoethylsulfonyl)naphthalene-1-sulfonic acid, prepared by sulfonation and simultaneous esterification of 2-amino-6-(β-hydroxyethylsulfonyl)-naphthalene, are added to a mixture of 1000 parts of water and 500 parts of ice, while stirring, and diazotized in the usual manner by means of 152 parts of an aqueous 40% sodium nitrite solution. After the diazotization reaction, nitrite in excess is decomposed with about 1 part of amidosulfonic acid. The suspension of the diazonium salt is then adjusted to a pH of 1.0 to 1.5 with sodium carbonate; thereafter, 308 parts of 2-benzoylamino-8-naphthol-6-sulfonic acid (in the form of its sodium salt) are added. For the coupling reaction, the pH is then adjusted and maintained at a value of from 6.0 to 6.5 with 200 parts of sodium carbonate. After completion of the coupling reaction, the synthesis solution obtained is filtered at a temperature of 40°C, and the monoazo compound according to the invention is precipitated by the addition of sodium chloride. The product is isolated by filtration and dried under reduced pressure at 70 to 80°C. A salt-containing (electrolyte-containing) red powder of the compound of the invention, corresponding to the formula

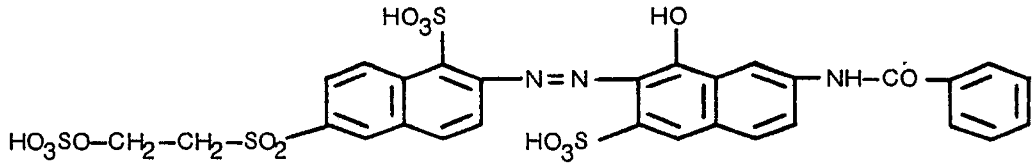

($\lambda_{max}$ = 493 nm)

is obtained in form of the sodium salt.

In an analogous manner, as described for the above sodium salt of the dyestuff of the invention, the potassium and lithium salts or mixtures of the alkali metal salts of the compound of the invention can be prepared.

The novel dyestuffs of the invention have very good fiber-reactive properties and yield strong-colored dyeings and prints of scarlet shades, having very good fastness properties, on the materials, in particular fiber materials, mentioned in the description part of the instant application text, such as preferably on cotton, when employing the application and fixation methods generally known and conventional in the technique for fiber-reactive dyestuffs. In particular, as regards the fastness properties of the dyeings obtainable, the fastnesses to washing at 60°C and 95°C, to alkkaline and acid perspiration, to bleaching with sodium chlorite and to chlorinated water, as well as to light (in the moist as well as in the dry state of the dyeing) can be stressed.

Example 2

361.5 parts of 2-amino-6-(β-sulfatoethylsulfonyl)naphthalene-1-sulfonic acid, prepared by sulfonation and simultaneous esterification of 2-amino-6-(β-hydroxyethylsulfonyl)-naphthalene, are added to a mixture of 1000 parts of water and 500 parts of ice, while stirring, and diazotized in the usual manner by means of 152 parts of an aqueous 40% sodium nitrite solution. After the diazotization reaction, nitrite in excess is decomposed with about 1 part of amidosulfonic acid. The suspension of the diazonium salt is then adjusted to a pH of 1.0 to 1.5 with sodium carbonate; thereafter, 250 parts of 2-acetylamino-8-naphthol-6-sulfonic acid (in the form of its sodium salt) are added. For the coupling reaction, the pH is then adjusted and maintained at a value of from 6.0 to 6.5 with 200 parts of sodium carbonate. After completion of the coupling reaction, the synthesis solution obtained is filtered at a temeprature of 40°C, and the monoazo compound according to the invention is precipitated by the addition of sodium chloride. The product is isolated by filtration and dried under reduced pressure at 70 to 80°C.

A salt-containing (electrolyte-containing) red powder of the compound of the invention, corresponding to the formula

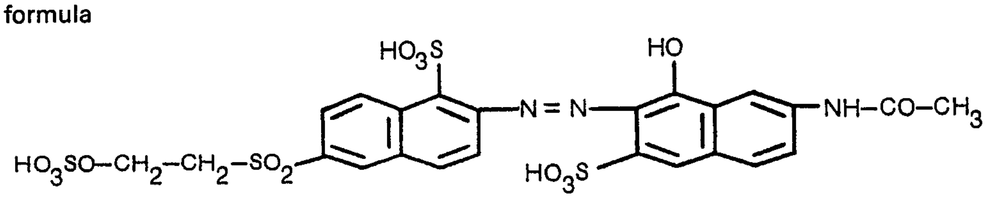

($\lambda_{max}$= 493 nm)

is obtained in form of the sodium salt.

In an analogous manner, as desxcribed for the above sodium salt of the dyestuff of the invention, the potassium and lithium salts or mixtures of the alkali metal salts of the compound of the invention can be prepared.

The novel dyestuffs of the invention have very good fiber-reactive properties and yield strong-colored dyeings and prints of scarlet shades, having very good fastness properties, on the materials, in particular fiber materials, mentioned in the description part of the instant application text, such as preferably on cotton, when employing the application and fixation methods generally known and conventional in the technique for fiber-reactive dyestuffs. In particular, as regards the fastness properties of the dyeings obtainable, the fastnesses to washing at 60°C and 95°C, to alkaline and acid perspiration, to bleaching with sodium chlorite and to chlorinated water, as well as to light (in the moist as well as in the dry state of the dyeing) can be stressed.

Example 3

62.8 parts of 2-aminonaphthalene-6-β-hydroxyethylsulfone are converted to the sulfuric acid ester by dissolving in 162 parts of 100% sulfuric acid, and then sulfonated by the addition of 78 parts of 65% oleum. The product is isolated by drowning in ice water (250 parts of water, 500 parts of ice, 62.5 parts of sodium chloride), filtering and washing the presscake with 250 parts of a cold aqueous 20% sodium chloride solution. The presscake is reslurried in 450 parts of water and 100 parts of ice and diazotized with 34.5 parts

of an aqueous 40% sodium nitrite solution. The excess nitrite is decomposed by the addition of one part of sulfamic acid. Then 363 parts of an aqueous 16% solution of 2-acetylamino-8-naphthol-6-sulfonic acid are added in the form of the lithium salt, and the pH of the reaction is adjusted to 5.0 to 5.5 with 65 parts of an aqueous 15% solution of sodium carbonate; the resulting solution is spray-dried to yield about 275 parts of dyestuff, containing inorganic sulfate salts and inorganic chloride salts. This dyestuff is identical with the dyestuff of Example 2 and shows the same good properties.

Examples 4 to 13

The following Table Examples describe further monoazo compounds according to the invention, which are written in form of the free acids; preferably they are present in form of their alkali metal salts, such as sodium, potassium or lithium salts. They can be prepared according to the process of the invention, for example, analogously to preceding working Examples, starting from the corresponding diazo and coupling components (such as the 2-amino-6-vinylsulfonyl-naphthalene-1-sulfonic acid, the 2-amino-6-(β-chloroethylsulfonyl)-naphthalene-1-sulfonic acid, the 2-amino-6-(β-thiosulfatoethyl-sulfonyl)-naphthalene-1-sulfonic acid, the 2-amino-6-(β-acetoxyethyl-sulfonyl)-naphthalene-1-sulfonic acid or the 2-amino-6-(β-phosphatoethylsulfonyl)-naphthalene-1-sulfonic acid as diazo component and the 2-benzoylamino-8-naphthol-6-sulfonic acid or, respectively, 2-acetylamino-8-naphthol-6-sulfonic acid as coupling component). These azo compounds according to the invention have also very good fibre-reactive dyestuff properties with very good properties for application on the material to be dyed, and they yield dyeings and prints on the fibre materials mentioned in the description part of the instant application text, in particular on cellulosic fibre materials, according to the application and fixation methods conventional for fibre-reactive dyestuffs, in high colour depths and scarlet shades; these dyeings and prints have the same level of good properties for fastnesses as described for the dyeings obtainable with the azo compound, according to the invention, of Example 1.

| Ex. | Monoazo dyestuff according to the invention |
|---|---|
| 4 | 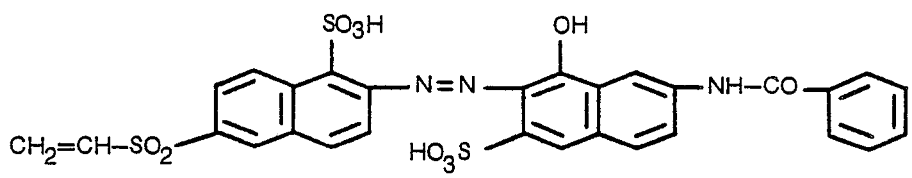 |
| 5 | 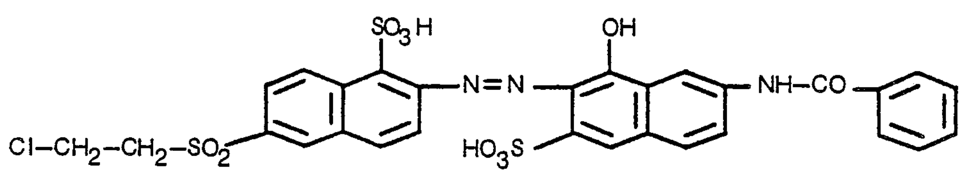 |
| 6 | 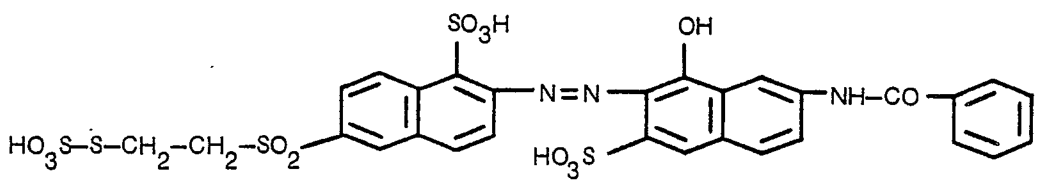 |
| 7 | 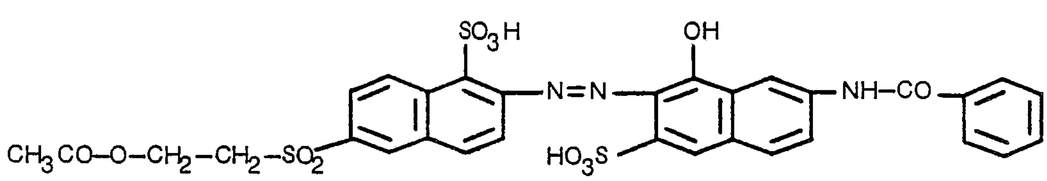 |
| 8 | 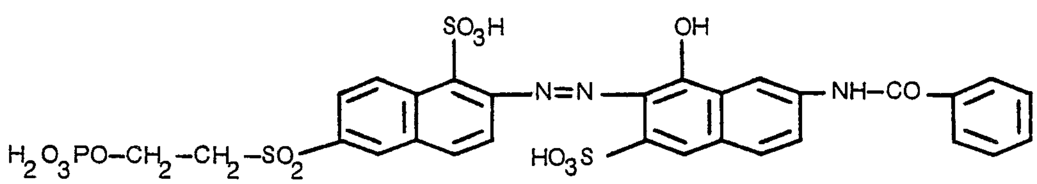 |

| Ex. | Monoazo dyestuff according to the invention |
|---|---|
| 9 | 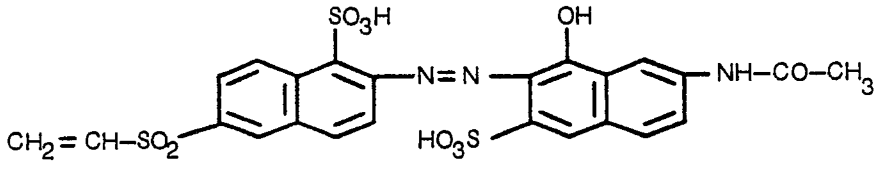 |
| 10 | 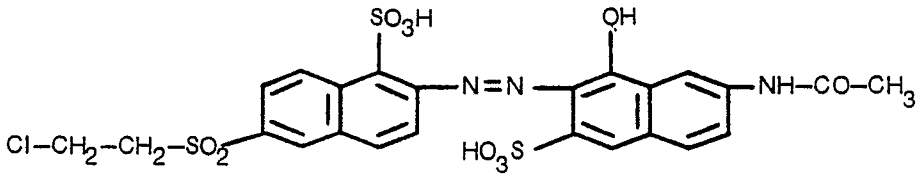 |
| 11 | 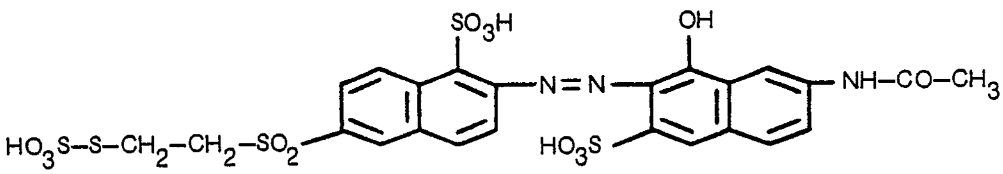 |
| 12 | 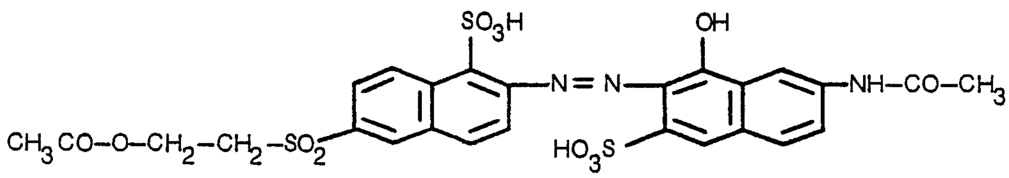 |
| 13 | 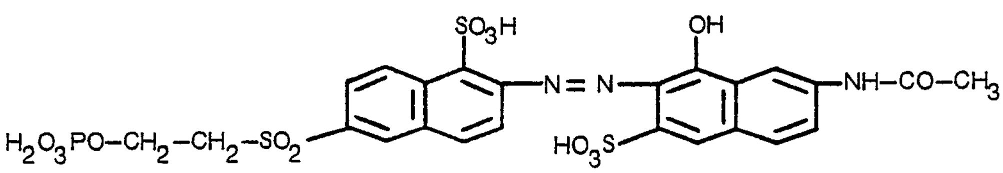 |

**Claims**

1. A water-soluble monoazo compound of the formula

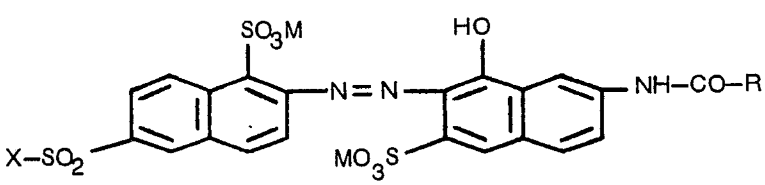 (1)

in which

M is a hydrogen or an alkali metal,

X is vinyl or a group of the formula

$$-CH_2-CH_2-Z$$

in which

Z is a substituent which can be eliminated by an alkaline agent, and

R is alkyl of 1 to 3 C-atoms or phenyl.

2. A compound according to claim 1, in which Z is chlorine, bromine, dialkylamino having alkyl groups of 1 to 4 carbons, alkanoyloxy having 2 to 5 carbons, phosphato of formula $-OPO_3M_2$, thiosulfato of formula $-S-SO_3M$ or sulfato of formula $-OSO_3M$, M being defined as in claim 1.

3. A compound according to claim 1, in which X is the vinyl group.

4. A compound according to claim 1, in which X is a β-sulfatoethyl group of the formula $-CH_2-CH_2-OSO_3M$ in which M is defined as in claim 1.

5. A compound according to claim 1, in which R is methyl.

6. A compound according to claim 1, in which R is phenyl.

7. A process for the preparation of a compound mentioned and defined in claim 1, characterized by coupling a compound of formula

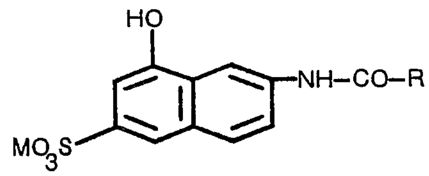

(3)

in which M and R are defined as in claim 1, with the diazonium salt of an amino compound of the formula

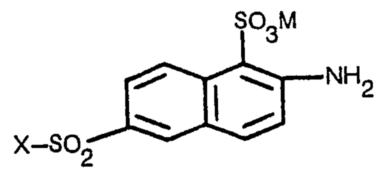

(4)

in which M and X are defined as in claim 1.

8. Use of an azo compound according to claim 1, or of an azo compound prepared according to claim 7, as dyestuff.

9. Use according to claim 8 for coloring a material containing hydroxy groups and/or carbonamide groups, preferably of a fiber material.

10. Use according to claim 9 for coloring a cellulose fiber material.

11. A process for coloring (dyeing or printing) a material, in particular a fiber material, containing hydroxy groups and/or carbonamide groups, which comprises applying an azo compound of claim 1 on said material or bringing it in contact with said material and fixing said azo compound on said material, optionally in the presence of an acid binding agent (alkaline agent) and/or by the action of heat.

12. A dyestuff composition comprising the compound as defined in claim 1 wherein X is the vinyl or the beta-sulfatoethyl group and R is the methyl or phenyl group.

13. A liquid dyestuff composition comprising 5 to 45% by weight of a water-soluble dyestuff according to claim 1 and water.

14. A liquid dyestuff composition comprising 5 to 45% by weight of a water-soluble dyestuff according to claim 2 and water.

**Patentansprüche**

1. Wasserlösliche Monoazoverbindung entsprechend der Formel

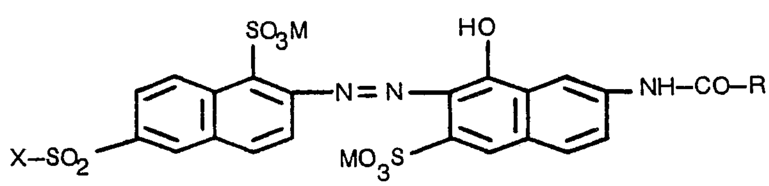

(1)

in welcher

M Wasserstoff oder ein Alkalimetall ist,

X Vinyl ist oder eine Gruppe der Formel

$$—CH_2—CH_2—Z$$

in welcher Z ein Substituent ist, der durch ein alkalisches Agenz eliminiert werden kann, und

R Alkyl von 1 bis 3 C-Atomen oder Phenyl ist.

2. Eine Verbindung gemäß Anspruch 1, in welcher Z Chlor, Brom, Dialkylamino mit Alkylgruppen von 1 bis 4 C-Atomen, Alkanoyloxy mit 2 bis 5 C-Atomen, Phosphato der Formel $—OPO_3M_2$, Thiosulfato der Formel $—S—SO_3M$ oder Sulfato der Formel $—OSO_3M$ ist, wobei M wie in Anspruch 1 definiert ist.

3. Eine Verbindung gemäß Anspruch 1, in welcher X die Vinylgruppe ist.

4. Eine Verbindung gemäß Anspruch 1, in welcher X eine β-Sulfatoethylgruppe der Formel $—CH_2—CH_2—OSO_3M$ ist, in welcher M wie in Anspruch 1 definiert ist.

5. Eine Verbindung gemäß Anspruch 1, in welcher R Methyl ist.

6. Eine Verbindung gemäß Anspruch 1, in welcher R Phenyl ist.

7. Ein Verfahren zur Herstellung einer in Anspruch 1 genannten und definierten Verbindung, dadurch gekennzeichnet, daß man eine Verbindung der Formel

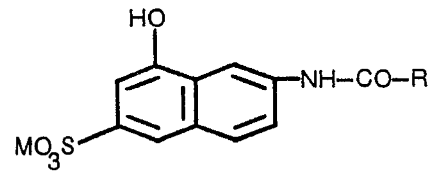

(3)

in welcher M und R wie in Anspruch 1 definiert sind, mit dem Diazoniumsalz einer Aminoverbindung der Formel

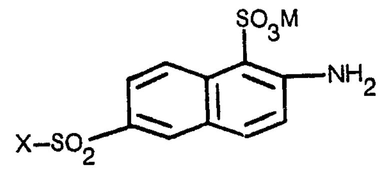

(4)

in welcher M und X wie in Anspruch 1 definiert sind, kuppelt.

8. Verwendung einer Azoverbindung gemäß Anspruch 1 oder einer gemäß Anspruch 7 hergestellten Azoverbindung als Farbstoff.

9. Verwendung gemäß Anspruch 8 zum Kolorieren (Färben) eines hydroxygruppen- und/oder carbonamidgruppen-haltigen Materials, vorzugsweise Fasermaterials.

10. Verwendung gemäß Anspruch 9 zum Kolorieren (Färben) von Cellulosefasermaterial.

11. Ein Verfahren zum Kolorieren (Färben oder Drucken) eines Materials, vorzugsweise Fasermaterials, das Hydroxygruppen und/oder Carbonamidgruppen enthält, gemäß dem man eine Azoverbindung von Anspruch 1 auf dieses Material aufbringt oder sie in Kontakt mit diesem Material bringt und diese Azoverbindung auf dem genannten Material, gegebenenfalls in Gegenwart eines säurebindenden Mittels (alkalischen Agenz) und/oder mittels Wärme (Hitze), fixiert.

12. Eine Farbstoffzusammensetzung mit der in Anspruch 1 definierten Verbindung, wobei X die Vinylgruppe oder die β-Sulfatoethylgruppe und R die Methyl- oder Phenylgruppe ist.

13. Eine flüssige Farbstoffzusammesetzung mit 5 bis 45 Gewichtsprozent eines wasserlöslichen Farbstoffes gemäß Anspruch 1 und Wasser.

14. Eine flüssige Farbstoffzusammesetzung mit 5 bis 45 Gewichtsprozent eines wasserlöslichen Farbstoffes gemäß Anspruch 2 und Wasser.

**Revendications**

1. Les composés monoazoïques solubles dans l'eau de formule:

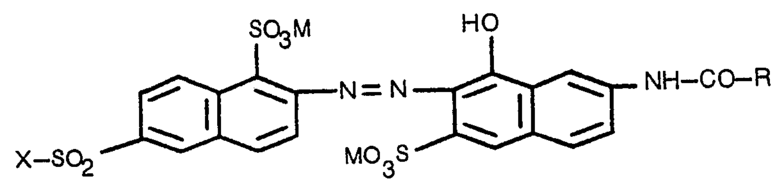

(1)

dans laquelle:

M représente l'hydrogène ou un métal alcalin,

X est le groupe vinyle ou un groupe de formule:

$$-CH_2-CH_2-Z$$

Z étant unsubstituant que l'on peut éliminer avec un agent alcalin, et

R représente un alkyle en $C_1$ à $C_3$ ou le groupe phényle.

2. Un composé selon la revendication 1 dans lequel Z est le chlore, le brome, un groupe dialkylamino à alkyles en $C_1$ à $C_4$, un groupe alcanoyloxy en $C_2$ à $C_5$, un groupe phosphato $-OPO_3M_2$, thiosulfato $-S-SO_3M$ ou sulfato $-OSO_3M$, M ayant la signification donnée à la revendication 1.

3. Un composé selon la revendication 1 dans lequel X est le groupe vinyle.

4. Un composé selon la revendication 1 dans lequel X est un groupe β-sulfatoéthyle $-CH_2-CH_2-OSO_3M$.

5. Un composé selon la revendication 1 dans lequel R est le groupe méthyle.

6. Un composé selon la revendication 1 dans lequel R est le groupe phényle.

7. Un procédé de préparation des composés selon la revendication 1, procédé caractérisé en ce que l'on copule un composé de formule:

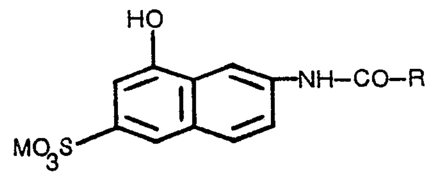

(3)

avec le sel de diazonium d'un composé aminé de formule:

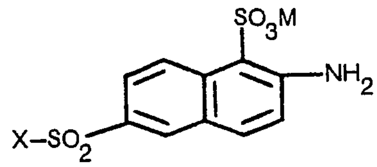

(4)

8. L'emploi comme colorants des composés azoïques selon la revendication 1 ou des composés azoïques qui ont été obtenus selon la revendication 7.

9. L'emploi selon la revendication 8 pour colorer, c'est-à-dire teindre ou imprimer, des matières à groupes hydroxyliques et/ou à groupes carboxamides, notamment des matières fibreuses.

10. L'emploi selon la revendication 9 pour colorer une matière fibreuse cellulosique.

11. Un procédé de coloration (teinture ou impression) de matières, en particulier de matières fibreuses, ayant des groupes hydroxyliques et/ou des groupes carboxamides, procédé qui consiste à appliquer sur la matière ou à mettre en contact avec elle un composé azoïque selon la revendication 1 et à fixer ce composé sur la matière, éventuellement en présence d'un agent liant les acides (agents alcalins) et/ou sous l'action de la chaleur.

12. Une composition de colorant comprenant un composé tel que défini à la revendication 1 dans lequel X est le groupe vinyle ou bêta-sulfatoéthyle et R est le groupe méthyle ou phényle.

13. Une composition de colorant liquide comprenant de 5 à 45% en poids d'un colorant hydrosoluble selon la revendication 1 avec de l'eau.

14. Une composition de colorant liquide comprenant de 5 à 45% en poids d'un colorant hydrosoluble selon la revendication 2 avec de l'eau.